# EUROPÄISCHE PATENTANMELDUNG

(11) **EP 4 454 747 A1**
(43) Veröffentlichungstag der Anmeldung: **30.10.2024**
(21) Anmeldenummer: 23170458.6
(22) Anmeldetag: 27.04.2023
(51) Int. Cl.: B01J 19/08, C01B 3/24, C01B 32/05

(54) **VORRICHTUNG UND VERFAHREN ZUR PLASMA-INDUZIERTEN ZERSETZUNG VON ALKANEN, INSBESONDERE VON METHAN, IN KOHLENSTOFF UND WASSERSTOFF**

(71) Anmelder: Leibniz-Institut für Plasmaforschung und Technologie e.V., 17489 Greifswald (DE)
(72) Erfinder: HUMMEL, Jan, 18439 Stralsund (DE); UHRLANDT, Dirk, 17498 Wackerow (DE); WELTMANN, Klaus-Dieter, 18609 Ostseebad Binz (DE); KOEGLER, Dan, 18445 Preetz OT Krönnevitz (DE); BRANDENBURG, Ronny, 17495 Groß Kiesow OT Kessin (DE); GONZALEZ, Diego, 17498 Neuenkirchen OT Leist 1 (DE)
(74) Vertreter: Schulz Junghans Patentanwälte PartGmbB

(57) **Zusammenfassung**

Die Erfindung betrifft eine Vorrichtung (1) zur plasma-induzierten Zersetzung von Alkanen, insbesondere von Methan, in Kohlenstoff und Wasserstoff, aufweisend:
- einen Fliehkraftabscheider (2), umfassend eine Prozesskammer (3), die sich um eine Hochachse (H) erstreckt und zumindest einen Gaseinlass (4) aufweist, der so ausgestaltet ist, dass eingeleitetes alkanhaltiges Gas um die Hochachse (H) der Prozesskammer (3) zirkuliert, sowie
- eine Plasmaeinrichtung (5), welche dazu ausgebildet ist, im alkanhaltigen Gas enthaltenes Alkan in einem Plasmabereich (6) der Prozesskammer (3) mittels Plasmas (7) in ein Kohlenstoff und Wasserstoff umfassendes Gas zu zersetzen, sodass eine Resublimation des Kohlenstoffs zu Kohlenstoffpartikeln bewirkt wird,
wobei die Kohlenstoffpartikel mittels des Fliehkraftabscheiders (2) von dem Gas separierbar sind und der Plasmabereich (6) ausschließlich abseits der Hochachse (H) liegt.

Die Erfindung betrifft außerdem ein entsprechendes Verfahren.

## Beschreibung

Die Erfindung betrifft eine Vorrichtung und ein Verfahren zur plasma-induzierten Zersetzung von Alkanen, insbesondere von Methan, in Kohlenstoff und Wasserstoff.

Für die Pyrolyse von Alkanen, insbesondere von Methan, zu Kohlenstoff und Wasserstoff zur Umgehung der klassischen Dampfreformierung bzw. ohne Einsatz von Sauerstoff wurden eine Reihe von Verfahren untersucht und teilweise bis zu Pilotanlagen entwickelt. Jedoch konnte sich bisher noch kein Verfahren am Markt etablieren. Die aktuelle Notwendigkeit solcher Verfahren ergibt sich aus der Zielstellung, eine CO₂-Emission möglichst vollständig zu vermeiden und Kohlenstoff aus Alkanen in Form eines geeigneten Wertstoffs zu gewinnen, der eine Verbrennung ausschließt. Gleichzeitig wird das Potential gesehen, Wasserstoff aus Alkanen mit deutlich weniger Einsatz von Elektroenergie und damit wirtschaftlicher zu gewinnen, als durch eine Elektrolyse von Wasser.

Bei der Pyrolyse von Alkanen sind rein thermische Verfahren, katalytische Verfahren und Plasmaverfahren zu unterscheiden. Thermische und katalytische Verfahren mit dem Zielprodukt H₂ sind bis zu einem Technologie-Reifegrad (Technology Readiness Level, TRL) von 4 entwickelt worden. Als Beispiel sei die thermische Pyrolyse von Methan auf einem Koksbett genannt, bei der optional auch ein Plasmaverfahren zur Heizung einsetzbar ist.

Ein Plasmaverfahren auf der Basis von bewegten Lichtbögen, das sogenannte Kvaerner-Verfahren, mit dem Ziel der Industrierußproduktion konnte bis zum TRL 8 entwickelt werden. Das Kvaerner-Verfahren arbeitet mit rotierenden Hochstrom-Lichtbögen, zielt auf Anlagengrößen mit Leistungseinsätzen oberhalb 1 MW ab und lässt sich - nachteilig - nicht auf kleine Leistungen skalieren. Eine geeignete Abscheidung des Kohlenstoffs aus dem heißen Reaktionsraum zur Generierung hoher Wasserstoffreinheiten ist beim Kvaerner-Verfahren nicht näher beschrieben, da dieses nicht in erster Linie für die Wasserstofferzeugung erarbeitet wurde.

Speziell für die Pyrolyse von Methan zu anderen Kohlenwasserstoffen mit Anteilen von Wasserstoff wurden verschiedene Plasmaverfahren umfangreich untersucht, wobei neben Gleichstrom (DC) Lichtbögen auch Gleitlichtbögen, Funkenentladungen, Coronaentladungen, dielektrisch behinderte Entladungen und Mikrowellenentladungen betrachtet wurden. Dabei wurden in Forschungsarbeiten hohe Konversionsraten insbesondere mit Mikrowellenentladungen (über 90%), DC-Lichtbögen (80 bis 90%) und Gleitlichtbögen im Niederdruck (75%) erreicht, wobei sich der Energieeinsatz pro Methanmolekül stark unterscheidet (von 1 eV bei Mikrowellenentladungen bis 18 eV beim Niederdruckverfahren) und im Wesentlichen Azetylen als Produkt erhalten wird. Eine industrielle Bedeutung erlangte insbesondere die Herstellung von Azetylen mittels Hochspannungsbögen im sogenannten Hülsreaktor. Anwendungen nichtthermischer Entladungen umfassen insbesondere Mikrowellenentladungen, dielektrisch behinderte Entladungen, gepulste Hochspannungsentladungen bis hin zum Vakuumbogen für die Generierung von Kohlenstoffhaltigen Nanostrukturen.

Aktuelle Forschungen zur Plasmapyrolyse von Alkanen, insbesondere Methan, zu Wasserstoff konzentrieren sich vor allem auf die Anwendung von Gleitlichtbögen. Als Beispiele seien Experimente in Argon mit kleinen Beimischungen von Methan sowie Laboranlagen mit rotierenden Elektroden genannt, die sich im Versuchsstadium befinden. Aussichtsreich erscheint die Anwendung von rotierenden Gleitlichtbögen, wie sie kürzlich für die Konversion von CO₂ vorgeschlagen wurde.

Alternativ zum Kvaerner-Verfahren wurde auch der Einsatz eines Wasserdampf-Plasmabrenners untersucht, wobei mit Leistungen bis 52 kW Methanströme von bis zu 500 slm prozessiert wurden.

Für den eigentlichen Zersetzungsprozess von Alkanen sowohl mit Hilfe von thermischen Plasmen als auch mit Hilfe von nichtthermischen Plasmen oder anderen elektrischen Heizmethoden sind also diverse Verfahren bekannt. Die nachfolgende Bearbeitung des Gemisches aus Wasserstoff und Kohlenstoffpartikeln steht jedoch vor dem Problem, dass bei niedrigen Temperaturen, insbesondere im Falle des Einsatzes von nichtthermischen Plasmen, oder bei Abkühlung des Gemisches unter 1000 K, relevant auch im Falle des Einsatzes von thermischen Plasmen, bevorzugt Rückreaktionen zu Kohlenwasserstoffen erfolgen. Diese führen zur Verunreinigung im gewonnenen Kohlenstoff, zu einer unvollständigen Wasserstoff-Ausbeute des Pyrolyseprozesses sowie potenziell zu Wandanlagerungen und Verstopfungen, welche einen Dauerbetrieb behindern.

Der vorliegenden Erfindung liegt hiervon ausgehend die Aufgabe zugrunde, eine Vorrichtung sowie ein Verfahren zur plasma-induzierten Zersetzung von Alkanen, insbesondere von Methan, in Kohlenstoff und Wasserstoff bereitzustellen, die bzw. das im Hinblick auf die oben beschriebene Problematik verbessert ist.

Diese Aufgabe wird durch eine Vorrichtung zur plasma-induzierten Zersetzung von Alkanen, insbesondere von Methan, in Kohlenstoff und Wasserstoff mit den Merkmalen des Anspruchs 1 sowie ein entsprechendes Verfahren gemäß Anspruch 13 gelöst.

Vorteilhafte Ausgestaltungen dieser Erfindungsaspekte sind in den entsprechenden Unteransprüchen angegeben und werden nachfolgend beschrieben.

Ein erster Aspekt der Erfindung betrifft eine Vorrichtung zur plasma-induzierten Zersetzung von Alkanen, insbesondere von Methan, in Kohlenstoff und Wasserstoff. Die erfindungsgemäße Vorrichtung weist auf:
- einen Fliehkraftabscheider, umfassend eine Prozesskammer, die sich um eine Hochachse erstreckt und zumindest einen Gaseinlass aufweist, der so ausgestaltet ist, dass eingeleitetes alkanhaltiges, insbesondere methanhaltiges Gas um die Hochachse der Prozesskammer zirkuliert, sowie
- eine Plasmaeinrichtung, welche dazu ausgebildet ist, im alkanhaltigen Gas enthaltene Alkane, insbesondere Methan, in einem Plasmabereich der Prozesskammer mittels Plasmas in ein Kohlenstoff und Wasserstoff umfassendes Gas zu zersetzen, sodass eine Resublimation des Kohlenstoffs zu Kohlenstoffpartikeln zu bewirkt wird,
wobei die Kohlenstoffpartikel mittels des Fliehkraftabscheiders von dem Gas separierbar sind und der Plasmabereich ausschließlich abseits der Hochachse liegt.

Durch die Ausbildung des Plasmas im Plasmabereich, welcher sich abseits der Hochachse befindet, wird vorteilhaft eine verstärkte Wechselwirkung zwischen dem Plasma und dem um die Hochachse zirkulierenden, alkanhaltigen Gas erreicht. Dies führt zu einer energieeffizienten Erhitzung des alkanhaltigen Gases und damit einer hohen Konversion des alkanhaltigen Gases in das Kohlenstoff und Wasserstoff umfassende Gas. Insbesondere führt die Zersetzung durch die effiziente Erhitzung des Gases dazu, dass Wasserstoff und Kohlenstoff durch die Zersetzung voneinander größtenteils getrennt vorliegen, und nicht mehr aneinander gebunden sind.

Die Zirkulation des Gases führt zu einer erhöhten Verweilzeit des Gases im Plasmabereich und damit zu einer effizienteren Zersetzung des alkanhaltigen Gases zu Kohlenstoff und Wasserstoff und Resublimation des Kohlenstoffs zu Kohlenstoffpartikeln.

Durch die Anordnung des Plasmabereichs abseits der Hochachse, wo das alkanhaltige Gas zirkuliert, ist die Plasmaeinrichtung insbesondere dazu ausgebildet, in der gesamten Prozesskammer derart hohe Temperaturen zu erzeugen, dass Rückreaktionen des gasförmigen Kohlenstoffs zu Kohlenwasserstoffen in der gesamten Prozesskammer effektiv behindert werden, was eine effiziente Resublimation des gasförmigen Kohlenstoffs zu Kohlenstoffpartikeln bewirkt und begünstigt. Dies ist insbesondere gewährleistet bei Temperaturen von über 1.000 K, insbesondere über 2.000 K.

Im Plasmabereich selbst können die Temperaturen über 10.000 K betragen, sodass atomarer Wasserstoff (ab ca. 3.500 K) und Kohlenstoff (ab ca. 6.000 K) gebildet werden. Die Resublimation des Kohlenstoffs des durch Wechselwirkung mit dem Plasma entstehenden Gases aus Kohlenstoff und Wasserstoff setzt unmittelbar im Anschluss an die Wechselwirkung ein, wobei die Kohlenstoffpartikel entstehen.

Die Temperaturen in der Prozesskammer werden maßgeblich durch die Energieeinstrahlung durch das Plasma beeinflusst. Demnach kann die Plasmaeinrichtung als Heizelement zum Heizen der Prozesskammer fungieren, wobei die Plasmaeinrichtung insbesondere dazu eingerichtet ist, die Temperatur in der Prozesskammer so hoch einzustellen, dass Rückreaktionen des Kohlenstoffs zu Kohlenwasserstoffen und ggf. anderen Molekülverbindungen unterdrückt werden.

Der Fliehkraftabscheider ermöglicht eine Separation in der Prozesskammer gebildeter Kohlenstoffpartikel von dem Gas, speziell eine Separation der Kohlenstoffpartikel vom gasförmigen Wasserstoff.

Der Plasmabereich beschreibt einen Bereich innerhalb der Prozesskammer, in dem sich das Plasma ausbildet. Das Plasma wird dabei verwendet, um das zirkulierende, alkanhaltige Gas derart zu erhitzen, dass dieses in das Kohlenstoff und Wasserstoff umfassende Gas zersetzt wird.

Es können mehrere, räumlich voneinander getrennte Plasmabereiche vorhanden sein, wobei die einzelnen Plasmabereiche jeweils abseits der Hochachse liegen.

Der Plasmabereich kann insbesondere exzentrisch zur Hochachse liegen.

Vorzugsweise wird das alkanhaltige Gas derart in die Prozesskammer eingeleitet, dass dieses entlang einer Innenwand der Prozesskammer und somit um deren Hochachse geführt wird.

Die Prozesskammer und deren Innenwand können rotationssymmetrisch um die Hochachse ausgebildet sein.

Vorzugsweise ist die Plasmaeinrichtung derart angeordnet bzw. ausgebildet, dass sich das durch die Plasmaeinrichtung erzeugte Plasma und damit der Plasmabereich insbesondere ausschließlich näher an der Innenwand der Prozesskammer als an der Hochachse befindet. Somit wird die Wechselwirkung zwischen dem entlang der Innenwand geführten, um die Hochachse zirkulierenden, alkanhaltigen Gas durch das in ebendiesem Bereich ausgebildeten Plasma vorteilhaft erhöht, was eine effiziente Erhitzung und damit Konversion des alkanhaltigen Gases zur Folge hat.

Als eingeleitetes, alkanhaltiges Gas können auch alkanhaltige Gasgemische verstanden werden, welche neben Alkanen zum Beispiel Stickstoff, Wasserstoff, Wasserdampf, Stickstoffmonoxid, Stickstoffdioxid, Kohlenmonoxid, Kohlendioxid oder inerte Gase umfassen können.

Gemäß einer Ausführungsform weist die Prozesskammer des Fliehkraftabscheiders einen an einen zylindrischen Kammerabschnitt anschließenden, sich in Richtung eines unteren Auslasses der Prozesskammer verjüngenden Kammerabschnitt auf. Der trichterförmige Kammerabschnitt erstreckt sich um die Hochachse der Prozesskammer, sodass eine Zirkulationsgeschwindigkeit des durch die Zersetzung von Alkanen, insbesondere von Methan, entstandenen Kohlenstoff und Wasserstoff umfassenden Gases im Bereich des sich verjüngenden Kammerabschnitts entlang der Hochachse in Richtung eines unteren Auslasses der Prozesskammer erhöht wird. Der untere Auslass ist dabei im Bereich eines dem zylindrischen Kammerabschnitt gegenüberliegenden Endabschnitts des sich verjüngenden Kammerabschnitts angeordnet. Gemäß dem Fliehkraftprinzip wird der gegenüber dem Wasserstoff schwere Kohlenstoff verstärkt von der Hochachse weg zur Innenwand des sich verjüngenden Kammerabschnitts getragen. Dieser Effekt wird aufgrund der durch den sich verjüngenden Kammerabschnitt erhöhten Zirkulationsgeschwindigkeit weiter verstärkt, sodass der Kohlenstoff durch diese Maßnahmen effektiv vom Wasserstoff abgesondert wird und die Prozesskammer schließlich schwerkraftgetrieben durch den unteren Auslass verlassen kann. Weiterhin ermöglicht der sich verjüngende Kammerabschnitt bzw. die dadurch bedingte Erhöhung der Zirkulationsgeschwindigkeit im Fliehkraftabscheider dazu, dass das zirkulierende, Kohlenstoff und Wasserstoff umfassende Gas eine gegenüber zum Beispiel einem sich nicht verjüngenden, beispielsweise zylindrischen Kammerabschnitt, erhöhte eine erhöhte Partikelseparationsrate im sich verjüngenden Kammerabschnitt aufweist. Im sich verjüngenden Kammerabschnitt, welcher in Richtung des unteren Auslasses an den zylindrischen Kammerabschnitt anschließt, sind durch die unmittelbare Nähe zum Plasmabereich ebenfalls Temperaturen von über 1.000 K, insbesondere über 2.000 K vorhanden. Die durch derartige Temperaturen geförderte Resublimation des Kohlenstoffs von Kohlenstoffgas zu Kohlenstoffpartikeln wird also unter Zirkulation weiter begünstigt, sodass sich infolge der erhöhten Verweilzeit größere bzw. schwerere Kohlenstoffpartikel bilden, welche gemäß dem Fliehkraftprinzip umso stärker zur Innenwand des sich verjüngenden Kammerabschnitts getragen werden. Die Separation von Kohlenstoff und Wasserstoff wird somit durch die hohen Temperaturen im Fliehkraftabscheider vorteilhaft erhöht. Darüber hinaus wird durch die hohen Temperaturen in der Prozesskammer eine Rekombination von Kohlenstoff und Wasserstoff zu Alkanen weitgehend unterbunden.

Vorzugsweise ist der sich verjüngende Kammerabschnitt rotationssymmetrisch in Bezug zur Hochachse ausgebildet. In anderen Worten weist der sich verjüngende Kammerabschnitt vorzugsweise eine Konus- bzw. eine Trichterform mit einem senkrecht zur Hochachse betrachtet kreisförmigen Querschnitt auf, welcher sich entlang der Hochachse vom zylindrischen Kammerabschnitt hin zum unteren Auslass der Prozesskammer verkleinert.

Alternativ sind auch elliptische, sich entsprechend entlang der Hochachse in Richtung des unteren Auslasses verkleinernde Querschnitte denkbar.

In einer weiteren Ausführungsform umfasst der untere Auslass eine gasdichte Schleuse oder wird durch eine solche gebildet, wobei die Schleuse dazu ausgebildet ist, den Kohlenstoff, insbesondere die Kohlenstoffpartikel, aus der Prozesskammer auszutragen. Durch die Gasdichtigkeit wird vorteilhaft erreicht, dass die Strömungseigenschaften des zirkulierenden alkanhaltigen Gases bzw. des Kohlenstoff und Wasserstoff umfassenden Gases nicht beeinflusst werden. Als gasdichte Schleuse ermöglicht der untere Auslass dennoch gleichzeitig das Austragen von Kohlenstoff, insbesondere Kohlenstoffpartikeln aus der Prozesskammer als erstes Produkt der Konversion. Die Schleuse kann beispielsweise mehrere Zellen zur Aufnahme des durch den Fliehkraftabscheider abgesonderten Kohlenstoffs, insbesondere der Kohlenstoffpartikel, aufweisen, wobei die Zellen nach einer vordefinierten Zeitspanne oder sobald eine vordefinierte Menge an Kohlenstoff, insbesondere an Kohlenstoffpartikel, durch die Zelle aufgenommen wurde, in eine nachgeschaltete Kohlenstoffsammeleinheit entleert werden. Eine Dichtung der Schleuse sorgt dabei vorzugsweise dafür, dass zu keinem Zeitpunkt ein Gasfluss zwischen einem Innenraum der Prozesskammer und deren äußerer Umgebung stattfindet. Beispielsweise handelt es sich bei der Schleuse um eine Zellenradschleuse.

Gemäß einer Ausführungsform weist die Vorrichtung ein Tauchrohr auf, welches sich durch eine Stirnseite, insbesondere eine Stirnwandung, der Prozesskammer hindurch zumindest teilweise in einen Innenraum der Prozesskammer erstreckt, sodass der durch Zersetzung von Alkanen, insbesondere Methan, in der Prozesskammer freigewordene Wasserstoff zumindest teilweise, insbesondere vollständig, durch das Tauchrohr aus der Prozesskammer entweichen kann.

Wegen seiner gegenüber dem Kohlenstoff, insbesondere den Kohlenstoffpartikeln geringeren Dichte steigt dabei der Wasserstoff vorteilhaft ohne weitere Maßnahmen aus der Prozesskammer auf. Insbesondere wird durch diese Anordnung erreicht, dass der im Vergleich zum Wasserstoff schwerere Kohlenstoff, bzw. die Kohlenstoffpartikel, die Vorrichtung nicht durch das Tauchrohr verlassen kann bzw. können, wodurch der gewonnene, aus dem Tauchrohr aufsteigende Wasserstoff praktisch rein ist und nur noch Restmengen anderer Gase enthält. Weiterhin vorteilhaft sorgt das sich in den Innenraum der Prozesskammer erstreckende Tauchrohr dafür, dass der infolge der Erhitzung des alkanhaltigen Gases vorliegende Wasserstoff bzw. Wasserstoffgas aus der Prozesskammer aufsteigt, bevor dieser derart erkaltet, dass Wasserstoff und Kohlenstoff in Rückreaktionen zu Kohlenwasserstoffen rekombinieren könnten. Damit bleibt die hohe Konversionseffizienz erhalten.

Insbesondere ist vorgesehen, dass sich das Tauchrohr durch die Stirnseite der Prozesskammer sowie durch den zylindrischen Kammerabschnitt hindurch bis in den sich verjüngenden Kammerabschnitt hinein erstreckt, sodass der Wasserstoff aus dem sich verjüngenden Kammerabschnitt über das Tauchrohr aus der Prozesskammer entweichen kann. Im sich verjüngenden Kammerabschnitt liegt der gegenüber dem Kohlenstoff, insbesondere den Kohlenstoffpartikeln, leichtere Wasserstoff gemäß dem Fliehkraftprinzip verstärkt im Bereich um die Hochachse vor, während der schwerere Kohlenstoff, insbesondere die Kohlenstoffpartikel, wie oben geschildert, von der Hochachse weg nach außen getragen wird. Durch die Anordnung der Öffnung des Tauchrohrs innerhalb des sich verjüngenden Kammerabschnitts wird somit erreicht, dass der vom Kohlenstoff, insbesondere von den Kohlenstoffpartikeln, abgesonderte Wasserstoff als ein zweites Produkt der Zersetzung des alkanhaltigen Gases aus der Prozesskammer entweichen kann, indem er durch seine im Vergleich zum umgebenden Gas geringere Dichte durch das Tauchrohr aus der Prozesskammer aufsteigt.

In einer Ausführungsform erstreckt sich das Tauchrohr entlang der Hochachse.

Gemäß einer weiteren Ausführungsform der Vorrichtung ist die Plasmaeinrichtung zur Ausbildung zumindest eines Lichtbogens ausgebildet, welcher zur Erhitzung des zirkulierenden alkanhaltigen Gases senkrecht zu dessen Zirkulationsrichtung orientiert ist, sodass das zirkulierende alkanhaltige Gas den Lichtbogen insbesondere mehrfach durchläuft.

Vorzugsweise definiert die räumliche Erstreckung des Lichtbogens den Plasmabereich.

Bei dem Lichtbogen kann es sich vorzugsweise um einen thermischen Lichtbogen und damit um ein thermisches Plasma handeln, wobei sich Neutralteilchen, Elektronen und durch Stoßionisation gebildete Ionen im Wesentlichen im thermischen Gleichgewicht befinden.

Gemäß einer Ausführungsform weist die Plasmaeinrichtung zur Ausbildung des Lichtbogens zumindest ein Elektrodenpaar, vorzugsweise vier, sechs, oder acht Elektrodenpaare, mit jeweils zwei gegenüberliegenden Elektroden auf.

Alternativ können lange, stark fluktuierende oder auch zwischen ringförmigen Elektroden rotierende Lichtbögen eingesetzt werden. Rotierende Lichtbögen können insbesondere mittels eines räumlich und zeitlich variierenden Magnetfelds realisiert werden.

Ein Lichtbogen kann folglich durch Anlegen einer elektrischen Spannung zwischen zwei Elektroden des jeweiligen Elektrodenpaars erzeugt werden, wobei sich der Lichtbogen zwischen den beiden Elektroden erstreckt und somit den Plasmabereich definiert. Der Plasmabereich bzw. die Plasmabereiche hängen somit insbesondere von der Anzahl, der Geometrie bzw. der räumlichen Anordnung der Elektroden in der Prozesskammer ab. Bei bekannten Strömungseigenschaften des eingeleiteten, alkanhaltigen Gases kann folglich die Elektrodengeometrie derart gewählt werden, dass sich der Lichtbogen bzw. mehrere zwischen verschiedenen Elektrodenpaaren ausgebildete Lichtbögen in Bereichen mit erhöhter Gaskonzentration erstrecken. Vorzugsweise sind die Elektroden derart angeordnet, dass der Großteil eines Gasflusses des alkanhaltigen Gases, insbesondere der gesamte Gasfluss, den Plasmabereich insbesondere mehrfach durchläuft. Beispielsweise kann hierfür der Gaseinlass tangential zur Innenwand der Prozesskammer und auf den Plasmabereich ausgerichtet sein, sodass das eingeleitete Gas unmittelbar nach dem Eintritt in die Prozesskammer den Plasmabereich durchläuft. Im Falle eines zylindrischen Kammerabschnitts können mehrere Plasmabereiche, beispielsweise um 60° oder 90° um die Hochachse zueinander versetzt, an der Innenwand der Prozesskammer angeordnet sein, sodass mehrere Plasmabereiche nacheinander durchlaufen werden. Insbesondere ermöglicht der zylindrische Kammerabschnitt ein wiederholtes Durchlaufen desselben Plasmabereichs bzw. derselben Plasmabereiche durch den Gasfluss, welcher auf einer Spiralbahn mittels der Innenwand der Prozesskammer durch selbige geführt wird. Durch diese Maßnahmen wird ein effizientes Erhitzen und somit eine hohe Konversion des eingeleiteten, alkanhaltigen Gases bewirkt.

Die Elektrodenpaare sind dabei vorzugsweise so zueinander angeordnet, dass der entstehende Lichtbogen quer zur Zirkulationsrichtung des zirkulierenden, alkanhaltigen Gases ausgerichtet ist.

Für den Fall, dass sich der entstehende Lichtbogen im Wesentlichen entlang einer beide Elektroden eines Elektrodenpaares verbindenden Verbindungsachse erstreckt, können beispielsweise die zwei Elektroden des Elektrodenpaares entlang der Hochachse voneinander versetzt sein, sodass sich der Lichtbogen im Wesentlichen parallel zur Hochachse ausbildet.

Denkbar ist in alternativer Ausführungsform ebenfalls, dass die Elektroden entlang eines Lots auf der Hochachse zueinander beabstandet sind, sodass sich der Lichtbogen im Wesentlichen senkrecht zur Hochachse ausbildet.

Weiterhin sind Elektrodenanordnungen denkbar, welche einen Lichtbogen erzeugen, der jeweils mit einer räumlichen Erstreckungskomponente senkrecht und einer räumlichen Erstreckungskomponente parallel zur Hochachse ausgebildet ist.

Bei der Plasmaeinrichtung kann es sich auch um einen oder mehrere Lichtbogenbrenner handeln, welche ein thermisches Plasma in Form eines Effluenten erzeugen. Der oder die Lichtbogenbrenner werden anstelle der Elektrodenpaare in der Kammeraußenwand integriert, so dass sich der jeweilige Effluent in die Prozesskammer erstreckt. Der Effluent ist dann vorzugsweise quer zur Zirkulationsrichtung des zirkulierenden, alkanhaltigen Gases ausgerichtet und definiert in dieser Ausführungsform auf diese Weise den Plasmabereich. Der Lichtbogenbrenner kann dabei mit dem alkanhaltigen Gas selbst oder mit einem inerten oder nichtinerten Zusatzgas betrieben werden. Bei dem Zusatzgas kann es sich zum Beispiel um Stickstoff, Wasserstoff, Wasserdampf, Stickstoffmonoxid, Stickstoffdioxid, Kohlenmonoxid, und/oder Kohlendioxid handeln.

In einer alternativen Ausführungsform der Erfindung ist die Plasmaeinrichtung zur Erzeugung eines Gleitlichtbogens ausgebildet. In diesem Fall handelt es sich bei dem Plasma vorzugsweise um ein nichtthermisches Plasma, wobei sich Elektronen und Ionen nicht im thermischen Gleichgewicht befinden. Dabei werden ein oder mehrere Gleitlichtbögen hinreichender Leistung so integriert bzw. ein entsprechender Leistungseintrag so eingestellt, dass Temperaturen oberhalb 1000 K in der Prozesskammer generiert werden.

Die Plasmaeinrichtung kann ferner einen oder mehrere Mikrowellenresonatoren aufweisen, die anstelle der Elektrodenanordnungen ein thermisches oder nichtthermisches Plasma erzeugen, welches bei entsprechend gewähltem Leistungseintrag zu Temperaturen oberhalb 1000 K in der Prozesskammer führt.

Vorgesehen ist weiterhin, dass die Plasmaeinrichtung zumindest eine Spule aufweist, welche zur Ausbildung eines induktiv angeregten Plasmas ausgebildet ist. Die Spule erzeugt hierzu ein Magnetfeld, welches dazu ausgebildet ist, in der Prozesskammer abseits der Hochachse anstelle der Elektrodenanordnungen ein induktiv eingekoppeltes Plasma zu erzeugen, welches zu hinreichend hohen Temperaturen oberhalb 1000 K in der Prozesskammer führt.

In einer weiteren Ausführungsform der Vorrichtung weist der zumindest eine Gaseinlass eine Düse auf, welche eine Beschleunigung des in die Prozesskammer einleitbaren alkanhaltigen Gases entlang der Düse ermöglicht, sodass das alkanhaltige Gas durch die Düse beschleunigt in die Prozesskammer eingeleitet werden kann. Hierdurch wird in vorteilhafter Weise die Wechselwirkung des eingeleiteten, alkanhaltigen Gases mit dem Plasma erhöht, indem das eingeleitete Gas insbesondere wiederholt entlang der Innenwand der Prozesskammer um die Hochachse umläuft und somit insbesondere wiederholt den Plasmabereich durchläuft.

Gemäß einer weiteren Ausführungsform weist die Vorrichtung einen elektrostatischen Abscheider mit einer Hochspannungselektrode auf. Die Hochspannungselektrode kann beispielsweise im Bereich des sich verjüngenden Kammerabschnitts angeordnet sein. Beispielsweise kann zumindest ein Abschnitt der Innenwand im Bereich des sich verjüngenden Kammerabschnitts durch die Hochspannungselektrode gebildet sein. Alternativ kann die Hochspannungselektrode auch jenseits der Innenwand und somit außerhalb der Prozesskammer angeordnet sein. Durch die mittels des Plasmas bewirkte Aufladung von Kohlenstoffpartikeln und Wasserstoff, bzw. deren Ionen, wird in dieser Ausführungsform das Abscheiden von Kohlenstoffpartikeln und Wasserstoff weiter begünstigt. Eine Gegenelektrode der Hochspannungselektrode kann dabei durch eine Elektrode der Elektrodenanordnung zur Ausbildung des Plasmas gebildet sein. Alternativ kann eine oder können mehrere Gegenelektroden in der Kammerwand angeordnet sein. Auch das Tauchrohr kann als Gegenelektrode fungieren.

In einer Ausführungsform der Erfindung umfasst die Vorrichtung einen Wärmeübertrager, welcher dazu ausgebildet ist, alkanhaltiges Gas vor dem Einleiten in die Prozesskammer vorzuheizen, indem der Wärmeübertrager dem mittels Plasmas erhitzten, in der Prozesskammer gebildeten Wasserstoff Wärme entnimmt und an das alkanhaltige Gas überträgt. Damit wird die Energieeffizienz der Vorrichtung vorteilhaft erhöht. Beispielsweise kann über das Tauchrohr aus der Prozesskammer entweichender, warmer Wasserstoff über ein Wärmeübertragermedium des Wärmeübertragers, beispielsweise Wasser, Wärme an das alkanhaltige Gas abgeben, bevor dieses über den Gaseinlass in die Prozesskammer geleitet wird. Zu diesem Zweck kann der abgeführte Wasserstoff beispielsweise durch ein erstes zweier Rohre abgeführt werden, welche sich durch ein mit dem Wärmeübertragermedium gefülltes Reservoir des Wärmeübertragers hindurch erstrecken. Das zweite der beiden Rohre wird dann als Zuleitung für das alkanhaltige Gas über den Gaseinlass in die Prozesskammer verwendet.

Ein zweiter Aspekt der Erfindung betrifft ein Verfahren zur plasma-induzierten Zersetzung von Alkanen, insbesondere von Methan, in Kohlenstoff und Wasserstoff. Dabei wird alkanhaltiges Gas, insbesondere methanhaltiges Gas, durch einen Gaseinlass in einen Fliehkraftabscheider mit einer Prozesskammer eingeleitet, sodass das eingeleitete alkanhaltige Gas um eine Hochachse der Prozesskamme zirkuliert, wobei im alkanhaltigen Gas enthaltenes Alkan, insbesondere im Gas enthaltenes Methan, in einem Plasmabereich der Prozesskammer mittels Plasmas in Kohlenstoff und Wasserstoff umfassendes Gas zersetzt wird, sodass eine Resublimation des Kohlenstoffs zu Kohlenstoffpartikeln bewirkt wird, wobei die Kohlenstoffpartikel mittels des Fliehkraftabscheiders von dem Gas separierbar sind und der Plasmabereich ausschließlich abseits der Hochachse liegt.

Insbesondere ist vorgesehen, dass das Verfahren gemäß dem zweiten Aspekt der Erfindung mittels einer Vorrichtung gemäß dem ersten Aspekt der Erfindung durchgeführt wird. Entsprechend gelten die Ausführungsformen des ersten Aspekts der Erfindung auch für den zweiten Aspekt der Erfindung und umgekehrt.

Gemäß einer Ausführungsform des Verfahrens wird eine Zirkulationsgeschwindigkeit des durch die Zersetzung von Alkanen, insbesondere von Methan, entstandenen Kohlenstoff und Wasserstoff umfassenden Gases mittels und innerhalb eines an einen zylindrischen Kammerabschnitt anschließenden, sich verjüngenden Kammerabschnitts der Prozesskammer entlang der Hochachse hin zu einem unteren Auslass der Prozesskammer erhöht.

In einer weiteren Ausführungsform des Verfahrens wird ein Leistungseintrag in die Prozesskammer über die Plasmaeinrichtung derart eingestellt, dass sich im zirkulierenden alkanhaltigen Gas oder im zirkulierenden alkanhaltigen Gas sowie im Kohlenstoff und Wasserstoff umfassenden Gas eine Temperatur im Bereich zwischen 1000 K und 2000 K einstellt.

Im Folgenden sollen ein Ausführungsbeispiel sowie weitere Merkmale und Vorteile der Erfindung anhand einer Figur erläutert werden.

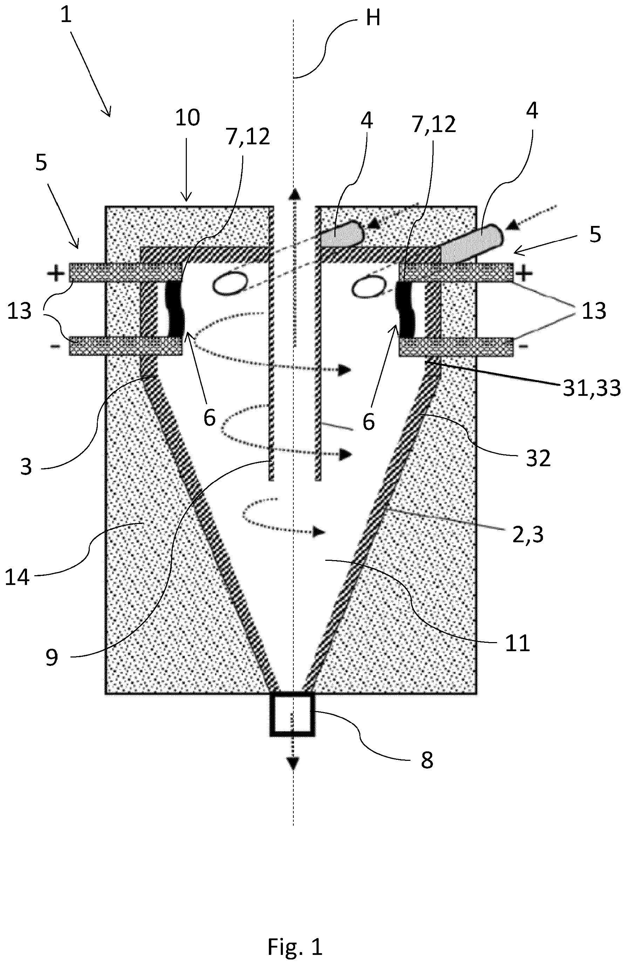

- Fig. 1: zeigt ein Ausführungsbeispiel der erfindungsgemäßen Vorrichtung zur plasma-induzierten Zersetzung von Alkanen, insbesondere von Methan, in Kohlenstoff und Wasserstoff.

Fig. 1 zeigt ein Ausführungsbeispiel der erfindungsgemäßen Vorrichtung 1 zur plasma-induzierten Zersetzung von Alkanen, insbesondere von Methan, in Kohlenstoff und Wasserstoff.

Die Vorrichtung 1 weist einen Fliehkraftabscheider 2 auf. Der Fliehkraftabscheider 2 umfasst eine Prozesskammer 3, die sich rotationssymmetrisch um eine Hochachse H erstreckt. Ein erster, innerhalb der gezeigten Zeichenebene betrachtet oberer Abschnitt der Prozesskammer 3 wird durch einen zylindrischen Kammerabschnitt 31 gebildet. Daran schließt sich entlang der Hochachse H nach unten ein trichterförmiger Kammerabschnitt 32 der Prozesskammer 3 an.

Im Bereich des zylindrischen Kammerabschnitts 31 sind in diesem Ausführungsbeispiel zwei Gaseinlässe 4 angeordnet. Über die Gaseinlässe 4 kann alkanhaltiges Gas derart in die Prozesskammer 3 eingeleitet werden, dass dieses entlang einer Innenwand 33 der Prozesskammer 3, insbesondere einer Innenwand 33 des zylindrischen Kammerabschnitts 31, strömt und somit um die Hochachse H zirkuliert. Bei den Gaseinlässen 4 kann es sich um Düsen handeln, sodass das alkanhaltige Gas über die Düsen beschleunigt in die Prozesskammer 3 eingeleitet und somit verstärkt über die Innenwand 33 um die Hochachse H geführt wird.

Die Vorrichtung 1 weist außerdem eine Plasmaeinrichtung 5 auf. In diesem Ausführungsbeispiel umfasst die Plasmaeinrichtung 5 zwei Elektrodenpaare, die bezüglich der Hochachse H symmetrisch in einem äußeren Bereich des zylindrischen Kammerabschnitts 31 der Prozesskammer 3 abseits der Hochachse H angeordnet sind. Es können auch mehr als zwei Elektrodenpaare vorhanden sein, welche insbesondere in 30°, 60° oder 90° Winkeln zueinander um die Hochachse H versetzt angeordnet sind. Die Elektroden 13 der Elektrodenpaare erstrecken sich vom Innenraum 11 der Prozesskammer durch die Innenwand 33 der Prozesskammer aus der Prozesskammer 3 heraus, sodass diese von außerhalb der Prozesskammer 3 elektrisch kontaktiert werden können. Durch Anlegen einer entsprechenden elektrischen Spannung zwischen den beiden Elektroden 13 des jeweiligen Elektrodenpaares kann im Bereich zwischen den beiden Elektroden 13 des jeweiligen Elektrodenpaares durch Stoßionisation des zirkulierenden, alkanhaltigen Gases jeweils ein Lichtbogen 12 entstehen. Die Lichtbögen 12 bilden in einem entsprechenden Plasmabereich 6 ein Plasma 7 mit Temperaturen über 1.000 K, insbesondere über 10.000 K. Der Plasmabereich 6, also der Bereich innerhalb der Prozesskammer 3, in dem sich das Plasma 7 ausbildet, wird durch die Geometrie und relative Anordnung der Elektroden 13 sowie deren Materialien und die verwendeten elektrischen Spannungen bestimmt. Beispielsweise können die Elektroden 13 Graphit aufweisen oder aus Graphit bestehen. Die Elektroden 13 eines Elektrodenpaares können beispielsweise zwischen 1 mm und 10 mm voneinander beabstandet sein. Die Lichtbögen 12 können mit Gleichstrom oder Wechselstrom im Bereich von wenigen Ampere bis zu mehreren hundert Ampere betrieben werden. Alternativ ist ein 3-Phasen-AC-Betrieb mit drei oder vier Elektroden 13 vorgesehen. Der bevorzugt verwendete Strom kann dabei mit den geometrischen Abmessungen der Vorrichtung 1 bzw. der Prozesskammer 3 sowie dem Abstand zwischen den Elektroden 13 entsprechend skaliert werden. Mit anderen Worten können verschiedene Dimensionen der Prozesskammer 3 realisiert werden, wobei für eine hinreichende Konversion lediglich der verwendete Strom angepasst werden muss. Beispielhafte Dimensionen der Prozesskammer 3 umfassen einen Durchmesser senkrecht zur Hochachse H von 50 mm im zylindrischen Kammerabschnitt 31 und eine Höhe von 100 mm, gemessen vom Gaseinlass 4 bis zum unteren Auslass 8.

Der Plasmabereich 6 liegt ausschließlich abseits der Hochachse H. Insbesondere liegt der Plasmabereich 6, wie in Fig. 1 sichtbar, näher an der Innenwand 33 der Prozesskammer 3 als an der Hochachse H. Durch die entlang der Hochachse H zueinander versetzte Anordnung der Elektroden 13 des jeweiligen Elektrodenpaares sind die Lichtbögen 12 und damit der Plasmabereich 6 außerdem senkrecht zur Zirkulationsrichtung des um die Hochachse H zirkulierenden, alkanhaltigen Gases orientiert. Durch diese Maßnahmen folgt vorteilhaft, dass das zirkulierende, alkanhaltige Gas die Lichtbögen 12 wiederholt durchläuft, wodurch das alkanhaltige Gas innerhalb der Lichtbögen energieeffizient auf Temperaturen über 1.000 K, insbesondere über 10.000 K, aufgeheizt wird. Die damit verbundene thermische Energie führt zur Zersetzung des alkanhaltigen Gases in ein heißes Wasserstoff und Kohlenstoff umfassendes Gas. Insbesondere führt die Zersetzung durch die effiziente Erhitzung des Gases dazu, dass Wasserstoff und Kohlenstoff durch die Zersetzung voneinander getrennt vorliegen, und nicht mehr aneinander gebunden sind, sodass der gasförmige Kohlenstoff anschließend zu Kohlenstoffpartikeln resublimieren kann. Die Resublimation kann bereits in dem Plasmabereich 6 und dessen unmittelbar Nähe stattfinden. Durch die Nähe des Fliehkraftabscheiders 2 zum Plasmabereich 6 sind in der gesamten Prozesskammer 3 derart hohe Temperaturen vorhanden, dass Rückreaktionen des gasförmigen Kohlenstoffs zu Kohlenwasserstoffen effektiv behindert werden. Dies ist der Fall bei Temperaturen von über 1.000 K, insbesondere über 2.000 K, und bewirkt eine effektive Resublimation des gasförmigen Kohlenstoffs zu Kohlenstoffpartikeln. Die Temperaturen in der Prozesskammer werden maßgeblich durch die Energieeinstrahlung durch das Plasma beeinflusst. Demnach kann die Plasmaeinrichtung als Heizelement zum Heizen der Prozesskammer fungieren, wobei die Plasmaeinrichtung insbesondere dazu eingerichtet ist, die Temperatur in der Prozesskammer so hoch einzustellen, dass Rückreaktionen des Kohlenstoffs zu Kohlenwasserstoffen und ggf. anderen Molekülverbindungen unterdrückt werden.

Als vorteilhafter Effekt neben der Zersetzung in Kohlenstoff, insbesondere in Kohlenstoffpartikel, und Wasserstoff trägt die Erhitzung des alkanhaltigen Gases darüber hinaus zu einer Beschleunigung des alkanhaltigen Gases bzw. des daraus entstehenden Kohlenstoff und Wasserstoff umfassenden Gases bei. Eine über die Gaseinlässe 4 bzw. entsprechende Düsen gegebenenfalls limitierte Einlassrate kann folglich kompensiert werden, indem die Zirkulationsgeschwindigkeit über die Erhitzung durch die Plasmaeinrichtung 5 entsprechend erhöht wird.

Die in Fig. 1 gezeigten Gaseinlässe 4 weisen bezüglich des Lots zur Hochachse H einen Anstellwinkel auf. Folglich strömt das weiterhin um die Hochachse H zirkulierende, heiße Wasserstoff und Kohlenstoff umfassende Gas nach der Zersetzung durch die Plasmaeinrichtung 5 in den sich verjüngenden Kammerabschnitt 32, welcher in diesem Ausführungsbeispiel trichterförmig ausgebildet ist. Durch die Trichterform wird die Zirkulationsgeschwindigkeit des zirkulierenden Kohlenstoff und Wasserstoff umfassenden Gases im Bereich des sich verjüngenden Kammerabschnitts 32 entlang der Hochachse H in Richtung eines unteren Auslasses 8 der Prozesskammer 3 erhöht. Gemäß dem Fliehkraftprinzip werden die gegenüber dem Gasgemisch, insbesondere dem Wasserstoff schweren Kohlenstoffpartikel verstärkt von der Hochachse H weg zur Innenwand 33 des sich verjüngenden Kammerabschnitts 32 getragen. Schließlich verlässt der durch diese Maßnahme vom Wasserstoff abgeschiedene Kohlenstoff bzw. die Kohlenstoffpartikel über den unteren Auslass 8 die Prozesskammer.

Der untere Auslass 8 ist vorzugsweise gasdicht gestaltet, sodass er die Strömungseigenschaften des eingeleiteten, alkanhaltigen Gases bzw. des Kohlenstoff und Wasserstoff umfassenden Gases nicht beeinflusst. Beispielsweise handelt es sich beim unteren Auslass 8 um eine Schleuse, insbesondere eine Zellenradschleuse. Somit wird erreicht, dass über den sich verjüngenden Kammerabschnitt 32 vom Wasserstoff abgesonderter Kohlenstoff, insbesondere abgesonderte Kohlenstoffpartikel, als ein erstes Produkt der Zersetzung des alkanhaltigen Gases aus der Prozesskammer 3 ausgetragen werden kann, wobei die Strömungseigenschaften innerhalb der Prozesskammer 3 unverändert bleiben.

Die in Fig. 1 gezeigte Vorrichtung umfasst außerdem ein Tauchrohr 9, welches sich entlang der Hochachse H durch eine obere Stirnseite 10 der Prozesskammer 3 sowie durch den zylindrischen Kammerabschnitt 31 hindurch bis in den sich verjüngenden Kammerabschnitt 32 hinein erstreckt. Im sich verjüngenden Kammerabschnitt 32 liegt der gegenüber Kohlenstoff, insbesondere den Kohlenstoffpartikeln, leichtere Wasserstoff gemäß dem Fliehkraftprinzip verstärkt im Bereich um die Hochachse H vor, während der schwerere Kohlenstoff, wie oben geschildert, von der Hochachse H weg nach außen getragen wird. Durch die Anordnung der Öffnung des Tauchrohrs H innerhalb des sich verjüngenden Kammerabschnitts 32 wird somit erreicht, dass der vom Kohlenstoff bzw. den Kohlenstoffpartikeln abgesonderte Wasserstoff als ein zweites Produkt der Zersetzung des alkanhaltigen Gases aus der Prozesskammer 3 entweichen kann, indem er durch seine im Vergleich zum Kohlenstoff bzw. den Kohlenstoffpartikeln geringere Dichte durch das Tauchrohr 9 aus der Prozesskammer 3 aufsteigt.

In diesem Ausführungsbeispiel ist die Prozesskammer weiterhin von einem Isoliermantel 14 umgeben. Der Isoliermantel 14 kann zum Beispiel Keramikfasern umfassen. Damit wird vorteilhaft eine hinreichende thermische Isolierung zwischen dem Innenraum 11 der Prozesskammer 3 und seiner Umgebung, bzw. der Umgebung der Vorrichtung 14, erreicht. Die vom Isoliermantel 14 umgebene Prozesskammer 3 bzw. deren Innenwand 33 weist für eine hinreichende Hitzebeständigkeit vorzugsweise ein keramisches Material, z.B. Aluminiumoxid auf.

### Bezugszeichenliste

| | |
|---|---|
| Vorrichtung | 1 |
| Fliehkraftabscheider | 2 |
| Prozesskammer | 3 |
| Gaseinlass | 4 |
| Plasmaeinrichtung | 5 |
| Plasmabereich | 6 |
| Plasma | 7 |
| Unterer Auslass | 8 |
| Tauchrohr | 9 |
| Stirnseite | 10 |
| Innenraum | 11 |
| Lichtbogen | 12 |
| Elektrode | 13 |
| Isoliermantel | 14 |
| Zylindrischer Kammerabschnitt | 31 |
| Trichterförmiger Kammerabschnitt | 32 |
| Innenwand | 33 |
| Hochachse | H |

## Patentansprüche

1. Eine Vorrichtung (1) zur plasma-induzierten Zersetzung von Alkanen, insbesondere von Methan, in Kohlenstoff und Wasserstoff, aufweisend:
- einen Fliehkraftabscheider (2), umfassend eine Prozesskammer (3), die sich um eine Hochachse (H) erstreckt und zumindest einen Gaseinlass (4) aufweist, der so ausgestaltet ist, dass eingeleitetes alkanhaltiges Gas um die Hochachse (H) der Prozesskammer (3) zirkuliert, sowie
- eine Plasmaeinrichtung (5), welche dazu ausgebildet ist, im alkanhaltigen Gas enthaltenes Alkan in einem Plasmabereich (6) der Prozesskammer (3) mittels Plasmas (7) in ein Kohlenstoff und Wasserstoff umfassendes Gas zu zersetzen, sodass eine Resublimation des Kohlenstoffs zu Kohlenstoffpartikeln bewirkt wird,
wobei die Kohlenstoffpartikel mittels des Fliehkraftabscheiders (2) von dem Gas separierbar sind und der Plasmabereich (6) ausschließlich abseits der Hochachse (H) liegt.

2. Die Vorrichtung (1) nach Anspruch 1, wobei die Prozesskammer (3) des Fliehkraftabscheiders (2) einen an einen zylindrischen Kammerabschnitt (31) anschließenden, sich in Richtung eines unteren Auslasses (8) der Prozesskammer verjüngenden, insbesondere trichterförmigen Kammerabschnitt (32) auf, welcher sich um die Hochachse (H) der Prozesskammer (3) erstreckt, sodass eine Zirkulationsgeschwindigkeit des durch die Zersetzung von Alkanen, insbesondere von Methan, entstandenen Kohlenstoff und Wasserstoff umfassenden Gases im Bereich des sich verjüngenden Kammerabschnitts (32) entlang der Hochachse (H) in Richtung des unteren Auslasses (8) der Prozesskammer (3) erhöht wird, wobei der untere Auslass (8) im Bereich eines dem zylindrischen Kammerabschnitt (31) gegenüberliegenden Endabschnitts des sich verjüngenden Kammerabschnitts (32) angeordnet ist.

3. Die Vorrichtung (1) nach Anspruch 2, wobei der untere Auslass (8) eine gasdichte Schleuse umfasst oder durch eine solche gebildet wird, wobei die Schleuse dazu ausgebildet ist, den Kohlenstoff, insbesondere die Kohlenstoffpartikel, aus der Prozesskammer (3) auszutragen.

4. Die Vorrichtung (1) nach einem der vorhergehenden Ansprüche, wobei die Vorrichtung (1) ein Tauchrohr (9) aufweist, welches sich durch eine Stirnseite (10) der Prozesskammer (3) hindurch zumindest teilweise in einen Innenraum (11) der Prozesskammer (3) erstreckt, sodass der durch Zersetzung von Alkanen, insbesondere Methan, in der Prozesskammer (3) freigewordene Wasserstoff zumindest teilweise durch das Tauchrohr (9) aus der Prozesskammer (3) entweichen kann.

5. Die Vorrichtung (1) nach Anspruch 4 unter Bezug auf einen der Ansprüche 2 oder 3, wobei sich das Tauchrohr (9) durch die Stirnseite (10) der Prozesskammer (3) sowie durch den zylindrischen Kammerabschnitt (31) hindurch bis in den sich verjüngenden Kammerabschnitt (32) hinein erstreckt, sodass der Wasserstoff aus dem sich verjüngenden Kammerabschnitt (32) über das Tauchrohr (9) aus der Prozesskammer (3) entweichen kann.

6. Die Vorrichtung (1) nach Anspruch 4 oder 5, wobei sich das Tauchrohr (9) entlang der Hochachse (H) erstreckt.

7. Die Vorrichtung (1) nach einem der vorhergehenden Ansprüche, wobei die Plasmaeinrichtung (5) zur Ausbildung zumindest eines Lichtbogens (12) ausgebildet ist, welcher zur Erhitzung des zirkulierenden alkanhaltigen Gases senkrecht zu dessen Zirkulationsrichtung orientiert ist, sodass das zirkulierende alkanhaltige Gas den Lichtbogen (12) insbesondere mehrfach durchläuft.

8. Die Vorrichtung (1) nach Anspruch 7, wobei die Plasmaeinrichtung (5) zur Ausbildung des Lichtbogens (12) zumindest ein Elektrodenpaar, vorzugsweise vier, sechs, oder acht Elektrodenpaare, mit jeweils zwei gegenüberliegenden Elektroden (13) aufweist.

9. Die Vorrichtung (1) nach einem der Ansprüche 1 bis 6, wobei die Plasmaeinrichtung (5) zur Erzeugung des Plasmas (7) eines der folgenden aufweist: eine Einrichtung zur Erzeugung zumindest eines Gleitlichtbogens, einen Mikrowellenresonator; eine Spule, welche zur Ausbildung eines induktiven Plasmas (7) ausgebildet ist; einen mit dem alkanhaltigen Gas betriebener Lichtbogenbrenner.

10. Die Vorrichtung (1) nach einem der vorhergehenden Ansprüche, wobei der zumindest eine Gaseinlass (4) eine Düse umfasst, welche eine Beschleunigung des in die Prozesskammer (3) einleitbaren alkanhaltigen Gases entlang der Düse ermöglicht, sodass das alkanhaltige Gas durch die Düse beschleunigt in die Prozesskammer (3) eingeleitet werden kann.

11. Die Vorrichtung (1) nach einem der vorhergehenden Ansprüche, aufweisend einen elektrostatischen Abscheider, welcher eine insbesondere im Bereich des sich verjüngenden Kammerabschnitts (32) angeordnete Hochspannungselektrode umfasst.

12. Die Vorrichtung (1) nach einem der vorhergehenden Ansprüche, aufweisend einen Wärmeübertrager, welcher dazu ausgebildet ist, alkanhaltiges Gas vor dem Einleiten in die Prozesskammer (3) vorzuheizen, indem der Wärmeübertrager dem mittels Plasmas erhitzten, in der Prozesskammer (3) gebildeten Wasserstoff Wärme entnimmt und an das alkanhaltige Gas überträgt.

13. Ein Verfahren zur plasma-induzierten Zersetzung von Alkanen, insbesondere von Methan, in Kohlenstoff und Wasserstoff, wobei alkanhaltiges Gas durch einen Gaseinlass (4) in einen Fliehkraftabscheider (2) mit einer Prozesskammer (3) eingeleitet wird, sodass das eingeleitete alkanhaltige Gas um eine Hochachse (H) der Prozesskammer (3) zirkuliert, wobei im alkanhaltigen Gas enthaltenes Alkan in einem Plasmabereich der Prozesskammer (3) mittels Plasmas (7) in Kohlenstoff und Wasserstoff umfassendes Gas zersetzt wird, sodass eine Resublimation des Kohlenstoffs zu Kohlenstoffpartikeln bewirkt wird, wobei die Kohlenstoffpartikel mittels des Fliehkraftabscheiders von dem Gas separierbar sind und der Plasmabereich (6) ausschließlich abseits der Hochachse (H) liegt.

14. Das Verfahren nach Anspruch 13, wobei eine Zirkulationsgeschwindigkeit des durch die Zersetzung von Alkanen, insbesondere von Methan, entstandenen, Kohlenstoff und Wasserstoff umfassenden Gases mittels und innerhalb eines an einen zylindrischen Kammerabschnitt (31) anschließenden, sich verjüngenden Kammerabschnitts der Prozesskammer (3) entlang der Hochachse (H) hin zu einem unteren Auslass (8) der Prozesskammer (3) erhöht wird.

15. Das Verfahren nach Anspruch 13 oder 14, wobei ein Leistungseintrag in die Prozesskammer (3) über die Plasmaeinrichtung (5) derart eingestellt wird, dass sich im zirkulierenden alkanhaltigen Gas oder im Kohlenstoff und Wasserstoff umfassenden Gas eine Temperatur im Bereich zwischen 1000 K und 2000 K einstellt.
